# EUROPEAN PATENT APPLICATION

(11) **EP 2 395 751 A1**
(43) Date of publication of application: **14.12.2011**
(21) Application number: 10165741.9
(22) Date of filing: 11.06.2010
(51) Int. Cl.: H04N 5/63, H04N 5/765

(54) **Installation or device with a high-definition multimedia interface**

(71) Applicant: EM Microelectronic-Marin SA, 2074 Marin (CH)
(72) Inventor: The designation of the inventor has not yet been filed
(74) Representative: Surmely, Gérard

(57) **Abstract**

The Installation or device is equipped with a power supply unit (50) and a High-Definition Multimedia Interface (HDMI), this installation or device being able to be connected to a second HDMI device with which it can communicate by using a protocol defined in the HDMI Standard, this installation or device being able to be set in Standby or Power-down mode and to be removed from this Standby or Power-down mode by said second HDMI device via a Consumer Electronic Control (CEC) line. The installation or device has a Power Management Unit (PMU) arranged on the primary side (52) of said power supply unit, this PMU having its own power supply circuit directly connected to the power supply source of this installation or device and being arranged for switching OFF the electrical energy on the secondary side (54) of said power supply unit when this installation or device enters said Standby or Power-down mode. The PMU is associated with CEC means (56) on said primary side arranged for decoding and processing at least a wake-up signal of a CEC Protocol defined in the HDMI Standard. The CEC interface (58) is arranged for directly communicating with the CEC means on said primary side. In particular, the CEC interface comprises a HDMI supply domain and a PMU supply domain which have a galvanic isolation, a data transfer between these HDMI and PMU domains via the CEC line being operated through at least a non-galvanic element.

## Description

### Field of the invention

The invention concerns an electrical installation or device having a power supply equipped with a voltage converter or transformer and a High-Definition Multimedia Interface (HDMI).

In particular, the invention may be implemented in audio/video consumer electronic devices equipped with HDMI functionality, such as a digital TV set, a display or a computer screen, a DVD player, a decoder or a demodulator (Set-Top Box), in entertainment devices like electronic play stations, etc.

### Background of the invention

Systems with high speed, high quality audio/video interfaces have been offered in the market since shortly after the release of the HDMI standards around 2002.

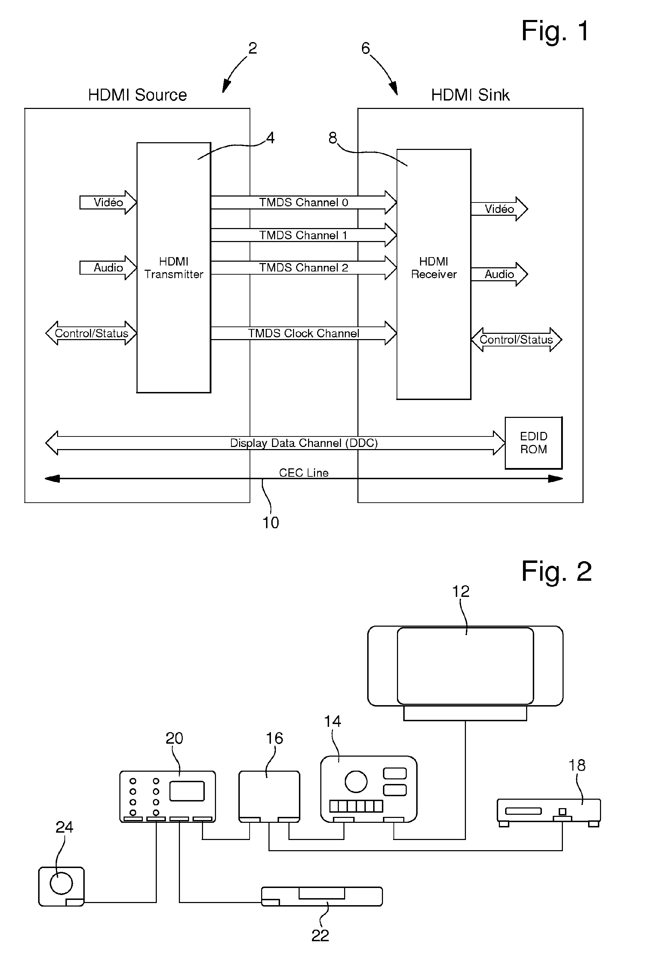

The general structure of such an HDMI is shown in Figure 1. Video and audio information is transmitted between a "source" part 2 of a first device having a HDMI transmitter 4 (e.g. DVD player, a set top box) and a "sink" part 6 of a second device having a HDMI Receiver 8 (e.g. a display, a digital TV) over the data and signal buses TMDS Channel 0, TMDS Channel 1, TMDS Channel 2 and TMDS Clock Channel. System display information is exchanged over the Display Data Channel (DDC). Operating modes (including entering and leaving Standby mode) of multiple devices are controlled and associated protocol messages are exchanged over the CEC (Consumer Electronic Control) line 10.

A typical system comprising multiple devices (in particular digital TV 12, DVD player 18 and Set Top Box 22) connected via HDMI is shown in Figure 2. The system has a given architecture with different levels reflected by the Physical Address (PA). On the first level are the Set Top Box 22 and a PC Game Box 24 both connected to a switcher 20. This switcher defines a second level with the DVD player 18, both being connected to an Audio-Video Recorder (AVR) 16. This AVR is connected to a recording device 14 which is finally connected to the Digital TV 12. A single CEC control line connects all system devices and a determined CEC Protocol allows these devices to communicate one to another, this CEC Protocol being included as an optional part of the HDMI Standard. Individual devices are identified by physical (PA) and logical (LA) addresses that are used for allowing a first device to exchange commands with a determined second device.

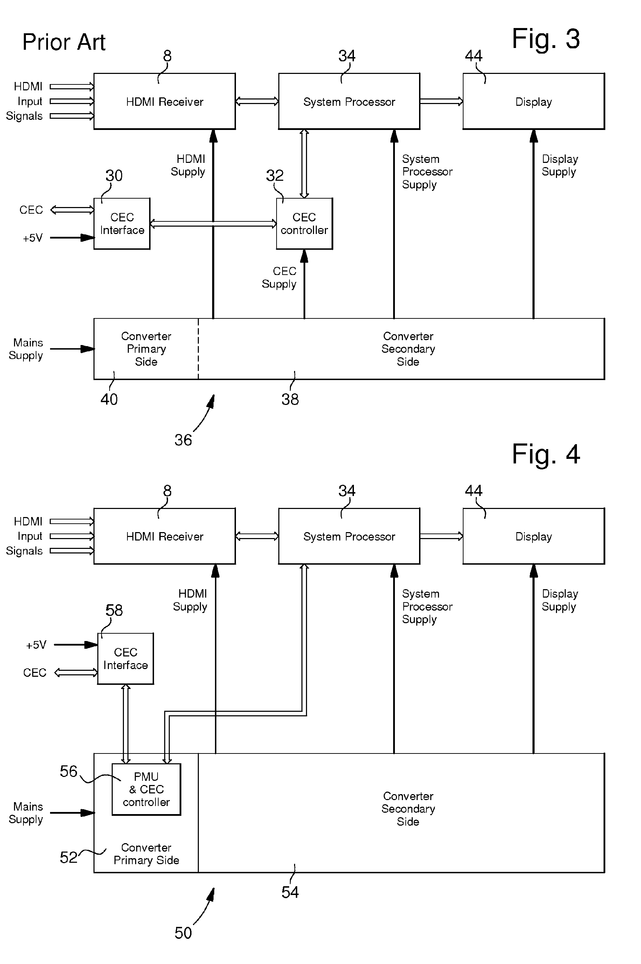

Decoding of CEC protocol and embedded commands is performed in each device connected to the CEC line 10. The CEC line is thereby connected to a physical CEC interface 30 arranged in each device followed by a decoder or more generally a CEC Controller 32 as shown in Figure 3. From a power supply perspective, standard HDMI-equipped systems implement power supply topologies that rely on the use of power supply subsystems or modules whereby system interfaces, system processors and display elements are powered by the secondary side of a converter. The CEC interface 30 of a first HDMI device, in particular a sink device, can be supplied by the secondary part of a second HDMI device, in particular a source device. The CEC interface is usually supplied with a voltage of 5 V. Thus, the source device which sends a command to a sink device under the CEC Protocol also provides the necessary electrical energy for supplying the CEC Interface of this sink device.

In the Standby mode of a conventional HDMI installation or device at least the CEC interface 30, the CEC controller 32 and also corresponding portions of the main system processor 34 are supplied and able to operate. The CEC controller and the system processor of each HDMI device are supplied by the secondary part 38 of the power supply unit 36 which is equipped with a voltage converter. The primary part 40 of this voltage converter is usually connected to the mains. Figure 3 schematically represents a digital TV with a display 44 also supplied by the power supply unit 36. It is to be noted that this display can have its own power supply unit or use a dedicated part of the power supply 36.

In order for a first HDMI device to be removed or woken up from a Standby or Power-down mode by a second HDMI device with the help of the CEC Protocol, the first HDMI device has in the present technology the secondary part of its power supply unit at least partially supplied for supplying at least the CEC Controller. Thus, the power consumption in the Standby or Power-down mode remains relatively high first because the primary side of the power converter is supplied in this mode and secondly also because a part of the electronic circuits on the secondary side of this power converter needs to be supplied for allowing the reception, decoding and processing of at least a wake-up signal sent under the CEC Protocol, i.e. a command sent by another HDMI device.

A very low energy consuming power supply architecture is disclosed in the document WO 2010/003785. It outlines an efficient power management in Standby or Power-down mode. This power supply comprises a converter defining a primary side and a secondary side for the device equipped with it. A Power Management Unit (PMU) is arranged on the primary side with its own secondary energy supply circuit directly linked to the mains. This PMU is associated with a control circuit of the converter for setting OFF this converter in a Power-down mode, in order to have a very low power consumption. However, in this Power-down mode, there is no supply of the secondary side of the converter. As a consequence, such a system cannot be used with above described standard HDMI devices having a CEC line allowing a first device to wake up a second device linked to this first device by an HDMI.

### Summary of the invention

Cumulative stand-by power consumption of HDMI equipped audio/video devices is increasing and will be very large in a near future. Thus, there is a large energy savings potential by reducing this electrical consumption to the lowest level. Since operating an HDMI involves at least two and in many cases several devices and systems, the standby energy consumption is multiplied accordingly.

A main object of the present invention is to reduce the power consumption of HDMI devices in Standby or Power-down mode.

The invention thus concerns an installation or device equipped with a power supply unit and a High-Definition Multimedia Interface (HDMI), this installation or device being able to be connected to a second HDMI device with which it can communicate by using a Protocol defined in the HDMI standard (HDMI Protocol), this installation or device being able to be set in Standby or Power-down mode and to be removed from this Standby or Power-down mode by said second HDMI device via a Consumer Electronic Control (CEC) line. This installation or device is characterized in that:
- it has a Power Management Unit (PMU) arranged on the primary side of the power supply unit, this PMU having its own power supply circuit directly connected to the power supply source of the installation or device and being arranged for switching OFF the electrical energy on the secondary side of said power supply unit when this installation or device enters said Standby or Power-down mode;
- the PMU is associated with CEC means on said primary side for decoding and processing at least a wake-up signal of a CEC Protocol defined in said HDMI Standard;
- it comprises a CEC interface which is arranged for directly communicating with said CEC means on said primary side.

In a preferred embodiment, the CEC interface comprises a HDMI supply domain and a PMU supply domain which have between them a galvanic isolation, a data transfer between these HDMI and PMU domains being operated through at least a non-galvanic element.

### Brief description of the drawings

The present invention will further be described in more detail in the following description with the help of the drawings, given as examples in a non-limiting way, in which:
- Figure 1, already described, schematically shows a standard HDMI structure;
- Figure 2, already described, schematically shows a typical system comprising multiple devices connected via HDMI;
- Figure 3, already described, schematically shows a standard architecture of a HDMI digital TV;
- Figure 4 schematically shows a first embodiment of a HDMI digital TV according to the present invention;
- Figure 5 schematically shows a second embodiment of a HDMI digital TV according to the present invention; and
- Figure 6 shows a preferred embodiment of the CEC interface according to the present invention.

### Detailed description

The architecture diagram of a first embodiment of an installation or device according to the present invention is shown in Figure 4. More particularly, this Figure 4 represents a HDMI digital TV. The supply of the display 44 can be made by a specific converter and associated circuits.

According to this first embodiment, the CEC controller is arranged on the converter primary side 52 of the power supply unit 50 and controls all CEC communication between the corresponding HDMI device and other HDMI devices of the system. In a preferred variant, the electrical supply of this CEC controller is provided, at least in Standby or Power-down mode, through the secondary power supply of the Power Management Unit (PMU) arranged on the primary side of the converter, as described in document WO 2010/003785 which is enclosed by reference in the present description. Thus, this variant has no CEC controller on the secondary side of the power unit but a CEC controller incorporated in a "PMU & CEC controller" electronic part 56 on the primary side which remains power supplied in Standby and Power-down mode. In a particular variant, the CEC controller is at least partially incorporated in the Micro-Controller Unit (MCU) of the PMU which is specifically arranged for decoding and processing CEC commands and data. The CEC line of the CEC Interface 58 is thus no more connected to a unit supplied by the secondary side 54 but to a unit supplied by the primary side 52 of the installation or device, what is not conventional for a person skilled in the art. A preferred embodiment of this CEC Interface 58 will be described later on.

When the system processor 34 is active, i.e. when the device is not in the Power-down mode and this system processor is power supplied by the converter secondary side 54, CEC commands and data not directly related to power management in a first variant or to the Power-down mode in a second variant are transmitted to the system processor 34 through a standard communication protocol such SPI, 12C, UART. Opto-coupler elements are provided in the signal path / on the signal line between the CEC controller and the system processor located on the secondary side of the power supply unit. CEC commands related to power-up or power-down are directly processed by the PMU, in order to switch ON or OFF the converter secondary side 54. CEC address allocation is also handled by the CEC controller on the converter primary side.

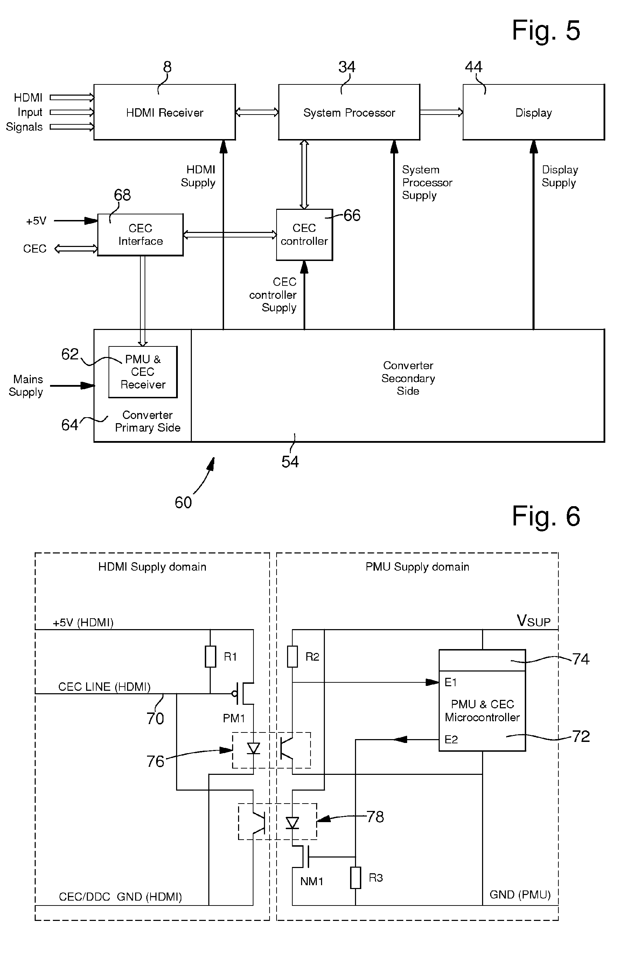

A second embodiment of an installation or device according to the invention is shown in Figure 5. A CEC receiver is arranged on the primary side 64 of the converter in the PMU supply domain and forms with the PMU a "PMU & CEC Receiver" electronic part 62. A further CEC controller 66 is arranged on the secondary side 54. The CEC receiver and the CEC controller both are connected to the CEC interface 68. The CEC receiver can receive power management commands coming from another HDMI device through the CEC interface 68 and it only handles such power management commands and also a "CEC address allocation" command. In a particular variant, it handles only commands requiring to power up or power down the secondary side 54 of the power supply unit 60 further to said "CEC address allocation" command. The power management commands handled by the CEC receiver are then processed by the PMU. The CEC and the PMU can be formed as a same electronic unit processing the CEC commands and managing at least power-up or power-down signals. As in the first embodiment, the CEC receiver can be at least partially incorporated in the MCU of the PMU.

The CEC controller 66 on the secondary side reacts to all other commands in active mode and also to the "CEC address allocation" command. This CEC controller 66 is similar to conventional CEC controllers and is directly connected to the CEC interface 68. The CEC receiver on the primary side and the CEC controller on secondary side must have the same address with the present CEC Protocol. It means that when a "CEC address allocation" command is handled both CEC receiver and controller shall set the given logical and physical CEC address.

A preferred embodiment of the CEC interface 58 of the first embodiment of the installation or device described here-before is shown in Figure 6. On one side there is the HDMI supply domain which is powered by the +5 V supply line defined as part of the HDMI standard connector. The ground (GND) connection in this domain is formed by the CEC/DDC line. The CEC line 70 supplies the data for the CEC protocol. On the other side there is the PMU supply domain which is supplied directly by the mains on line "VSUP" and the corresponding ground line GND. A PMU & CEC Microcontroller 72 (MCU) is directly supplied from the mains via its own secondary power supply 74 including one or more voltage reducer(s). A detailed description of such a secondary power supply for a MCU is given in the document WO 2010/003785 which is enclosed by reference in the present description. It is to be noted that the circuit on the PMU Supply domain (R2, 76, 78, NM1 and R3) can advantageously in a further variant be power supplied through an intermediate level of the secondary power supply 74 providing an intermediate voltage, e.g. 12 V.

For safety reasons, the HDMI supply domain and a PMU supply domain have a galvanic isolation, a data transfer between these HDMI and PMU domains being operated through at least a non-galvanic element. This is an important feature of the CEC interface according to the present invention. In the variant of Figure 6, two opto-couplers 76 and 78 are arranged for transmitting data in both communication directions. Without such a galvanic isolation the phase wire from the mains could be directly connected to GND (PMU). If we connect GND (PMU) to GND (HDMI) via a galvanic path, the phase wire could be connected to the ground of the HDMI cable which is, from a safety point of view, dangerous.

The CEC protocol is very slow and can be handled by a MCU of moderate computational performance. Frequency is generally 400 Hz. By default, when no device communicates on CEC line 70, the CEC voltage is at +5 V. This voltage is guaranteed by pull-up resistor R1 on the HDMI domain side. Each device connected to CEC line 70 has such resistor. The value of this resistor is defined in the CEC specification: 27 kohm +/- 5% or 26 kOhm +/- 10% when integrated. The CEC protocol consists of sending serial encoded bits as follows: logical '0' consists of driving the CEC line to 0 V (CEC/DDC GND) during 1.5 ms and release to +5 V with the help of the pull-up resistor during 0,9 ms. Logical '1' consists of driving the CEC line to 0 V (CEC/DDC GND) during 0,6 ms and releasing it to +5 V with the help of the pull-up resistor during 1.8 ms. In both cases the bit transmission duration is 2.4 ms. Sampling is done in a window of +/-0.2 ms around 1.05 ms after first falling of CEC line.

The MCU 72 in the PMU supply domain receives data from the CEC line 70 on input E1 through the opto-coupler 76 (OPTO1) and transistor PM1. When the voltage on CEC line 70 is at +5 V (logical level '1') the transistor PM1 is non-conductive, the LED in OPT01 is OFF and then the bi-polar element in OPT01 is non-conductive. Due to the pull-up resistor R2 logical level on E1 is at '1'. When the CEC line 70 is at 0 V (logical level '0') the transistor PM1 is conductive, the LED in OPT01 is ON and then the bi-polar element in OPT01 is conductive. This bi-polar element forces E1 at logical level '0'.

The MCU 72 in the PMU supply domain sends data to the CEC line 70 in E2 through the transistor NM1 and the opto-coupler 78 (OPT02). When E2 is at logical level '1' the transistor NM1 is conductive, the LED in OPT02 is ON and then the bi-polar element in OPT02 is conductive and forces CEC line to 0 V (logical level '0'). When E2 is at logical level '0' the transistor NM1 is non-conductive, the LED in OPT02 is OFF and then the bi-polar element in OPT02 is non-conductive. Thus, CEC line 70 is at +5 V (logical level '1') due to the pull-up resistor R1.

The HDMI specifications call for a maximum leakage current of 1.8 µA on the CEC line toward CEC/DDC_GND when the system is powered OFF. The opto-coupler OPT02 has to be OFF even if the voltage supply VSUP is floating. R3 ensures that the transistor NM1 is OFF when no power is supplied to VSUP.

It is to be noted that a same CEC interface can be implemented in the CEC Interface 68 of the second embodiment of an installation or device previously described for the communication toward the "PMU & CEC receiver" electronic part 62 (Figure 5). Such a CEC interface can be arranged in parallel with a standard interface with the CEC controller 66. Other variants for the CEC interface 68 can be provided by a person skilled in the art wherein both interfaces to the CEC receiver and controller are combined.

A specific application of the present invention, based on the second embodiment of an installation or device previously described, is outlined on the example of wake-up and standby operations of a HDMI-equipped DVD player. Waking up such a DVD player is achieved through the HDMI-defined CEC protocol. In the low power mode (Standby or Power-down mode) only the "PMU & CEC Receiver" electronic part is supplied while the rest of the system is not powered. The corresponding MCU receives commands over the CEC interface to wake up the DVD player. In this case the "PMU & CEC Receiver" MCU uses the same CEC logical and physical address as the DVD player main system processor (LA =4, PA = 1.1.2.0). In the Power-down mode this MCU decodes the CEC protocol and reacts to CEC events that require action and/or a response from the DVD player (e.g. the "standby" or "play" commands). If such a decoded message requires the DVD player to move from its low power mode to an active mode the "PMU & CEC Receiver" MCU starts up the power converter to supply the elements on the converter secondary side for operation.

## Claims

1. Installation or device equipped with a power supply unit (50; 60) and a High-Definition Multimedia Interface (HDMI), this installation or device being able to be connected to a second HDMI device with which it can communicate by using a protocol defined in the HDMI Standard, this installation or device being able to be set in Standby or Power-down mode and to be removed from this Standby or Power-down mode by said second HDMI device via a Consumer Electronic Control (CEC) line (10), **characterized in that** the installation or device has a Power Management Unit (PMU) arranged on the primary side (52; 64) of said power supply unit, this PMU having its own power supply circuit (74) directly connected to the power supply source (VSUP) of the installation or device and being arranged for switching OFF the electrical energy on the secondary side (54) of said power supply unit when this installation or device enters said Standby or Power-down mode, **in that** said PMU is associated with CEC means (56; 62) on said primary side for decoding and processing at least a wake-up signal of a CEC Protocol defined in said HDMI Standard, and **in that** it comprises a CEC interface (58; 68) which is arranged for directly communicating with said CEC means on said primary side.

2. Installation or device according to claim 1, **characterized in that** said CEC interface comprises a HDMI supply domain and a PMU supply domain which have a galvanic isolation, a data transfer between these HDMI and PMU domains via said CEC line being operated through at least a non-galvanic element.

3. Installation or device according to claim 2, **characterized in that** said non-galvanic element is an opto-coupler.

4. Installation or device according to claim 3, **characterized in that** said CEC interface comprises two opto-couplers for a bidirectional communication between said CEC means on said primary side and said second HDMI device.

5. Installation or device according to any one of the preceding claims, **characterized in that** said CEC means on said primary side are formed by a CEC controller (56) which receives from said CEC interface and processes all command signals of the CEC Protocol, this CEC controller being connected to a system processor on said secondary side to which it transmits at least commands and data not directly related to power management of the installation or device.

6. Installation or device according to any one of the preceding claims, **characterized in that** said CEC means on said primary side are formed by a CEC receiver (62) which is arranged for receiving and handling a "CEC address allocation" command and further at least commands requiring to power up or power down the secondary side of the installation or device in order to enter, respectively to be removed from said Power-down mode.

7. Installation or device according to claim 6, **characterized in that** it further comprises a CEC controller (66) on said secondary side, this CEC controller and said CEC receiver being both directly connected to said CEC interface (68).
